## Europäisches Patentamt

(19) **European Patent Office**

**Office européen des brevets**

(11) Publication number: **0 076 098**
**B1**

## EUROPEAN PATENT SPECIFICATION

(45) Date of publication of patent specification: **10.12.86**

(51) Int. Cl.⁴: **G 06 F 11/10**

(21) Application number: **82305012.5**

(22) Date of filing: **23.09.82**

(54) Key storage error processing system.

(30) Priority: **24.09.81 JP 151046/81**

(43) Date of publication of application:
**06.04.83 Bulletin 83/14**

(45) Publication of the grant of the patent:
**10.12.86 Bulletin 86/50**

(84) Designated Contracting States:
**DE FR GB**

(56) References cited:
**EP-A-0 010 123**
**US-A-4 084 236**
**US-A-4 092 713**

**IBM TECHNICAL DISCLOSURE BULLETIN, vol. 14, no. 12, May 1972, pages 3584-3585, New York, US; R.S. CAPOWSKI et al.: "Storage protect mechanism with reference and change recording"**

**IBM TECHNICAL DISCLOSURE BULLETIN, vol. 20, no. 9, February 1978, pages 3585-2586, New York, US; E.J. ANNUNZIATA et al.: "Cache error handling in a store-in-cache design"**

**COMPUTER DESIGN, vol. 20, no. 7, July 1981, pages 151-156, Concord, US; P.D. VOGT: "Memory management"**

(73) Proprietor: **FUJITSU LIMITED**
**1015, Kamikodanaka Nakahara-ku**
**Kawasaki-shi Kanagawa 211 (JP)**

(72) Inventor: **Tateishi, Terutaka**
**3751, Suge Tama-ku, Kawasaki-shi**
**Kanagawa, Dai 2 Himeyuriso, 214 (JP)**
Inventor: **Shimizu, Kazuyuki**
**2-19-22 Ogawa Machida-shi**
**Tokyo, 194 (JP)**

(74) Representative: **Sunderland, James Harry et al**
**HASELTINE LAKE & CO Hazlitt House 28**
**Southampton Buildings Chancery Lane**
**London WC2A 1AT (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a key storage error processing system.

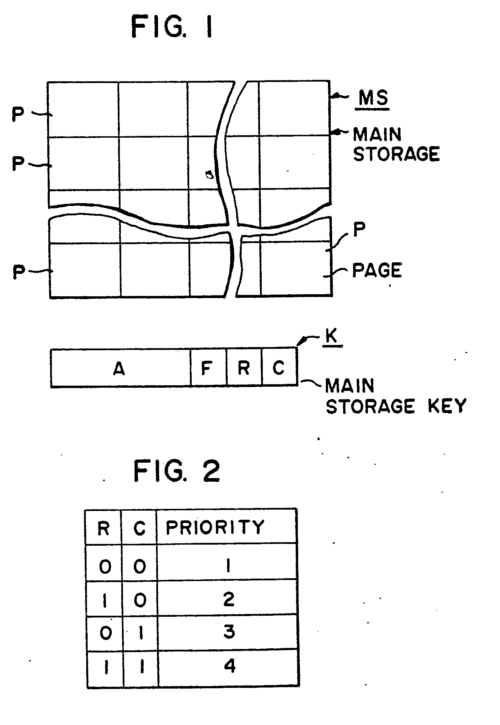

Figure 1 of the accompanying drawings is a schematic diagram explanatory of the relationship between a main storage and a key storage. In Figure 1, MS indicates generally a main storage; P designates pages; K indicates a main storage key; A denotes access-control bits; F is a fetch-protection bit; R is a reference bit; and C is a change bit. The main storage MS is split into a plurality of pages P, each consisting of a 2K-byte block, for instance, and associated with one main storage key K. The main storage key K is stored in a key storage (not shown). An information processing system equipped with such a main storage and such a key (key in) storage as mentioned above is disclosed for example, in IBM System/370 Principles of Operation.

A key storage error processing system is also known from Computer Design, Vol 20, No 7, July 1981, pages 151—156; this system has parity bits associated with the access information and means for detecting parity errors. The document does not disclose rewriting the key with a fixed pattern that increases the priority of the page after detecting an error.

Whenever information is stored or fetched, the access-control bits A of the main storage key K are matched with a program-protection key, thereby to perform storage protection of the main storage MS. The fetch-protection bit F indicates whether storage protection is applied when information is fetched from the main storage MS. The reference bit R indicates whether the corresponding page of the main storage is accessed, and when the page is accessed, the reference bit R of the main storage key K corresponding to the page is set to a "1". The change bit C indicates whether information is stored in (has been stored into) the corresponding page of the main storage MS, and when information is (has been) stored into the page, the change bit C of the corresponding main storage key K is set to a "1".

The reference bit R and the change bit C are used when information is transferred in units of pages, to the main storage MS from an external storage, such as a magnetic-disc unit. For instance, in a computer system having a virtual storage system, information is fetched and stored on the assumption that a storage area of an external storage exists in the main storage. Accordingly, when required information is not in fact present in the main storage MS, the information must be paged-in from the external storage to the main storage MS and an area must be secured therefor in the main storage MS. In this case, if there is no free or space area in the main storage MS, a search is made for an area of main storage holding information that is considered unnecessary and the information is paged-out into the external storage to secure an area for receiving the required information from the external storage.

In such a page-out operation, priorities are usually attached to the pages for making a search for an area holding unnecessary information.

Figure 2 of the accompanying drawings is a schematic diagram which shows the relationship between the priority assigned or attached to a page and the reference and change bits R and C of the main storage key relating to the page. When the change bit C is "0", it indicates that the contents of the page of the main storage MS corresponding to the main storage key K remain unchanged and, accordingly, that the contents of the page are stored in the external storage and the contents of the page need not be transferred thereto. That is, a page-out operation is unnecessary. The reference bit R indicates whether the page of the main storage MS corresponding to the main storage key K is accessed or not. Accordingly, when the reference bit R and the change bit C are both "0", the contents of the corresponding page are not changed, nor is the page accessed, so that the page is given the highest priority for save. When the reference bit R and the change bit C are both "1", this indicates that the contents of the relevant page are changed and that the page is accessed and, accordingly, the page is given the fourth priority for save. Incidentally, the reference bit R is set to "0" by the execution of a reset reference bit instruction when the key storage is retrieved for a fixed period of time or for the page-out operation.

It is general practice to add a parity bit for detecting an error in the reference bit R and the change bit C.

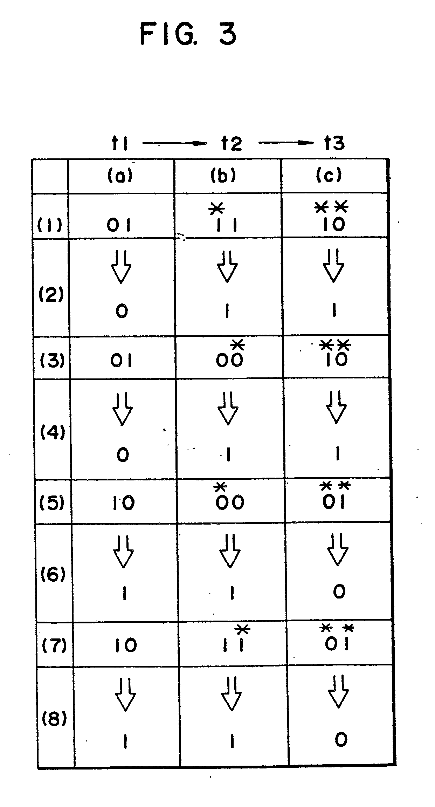

Figure 3 of the accompanying drawings is a schematic diagram explanatory of a conventional error processing system in a case in which odd parity is employed.

In Figure 3, (a) shows a case in which two bits of a pair comprising the reference bit R or the change bit C and a parity bit are correct at a time t1; (b) shows a case in which when the reference bit R or the change bit C is read out at a time t2 after the lapse of an arbitrary period of time, one of the two bits is erroneous; and (c) shows a case in which the reference bit R or the change bit C is read out at a time t3 a certain period of time after the time t2, the other bit is also erroneous. In Figure 3, an asterisk is used to indicate an erroneous bit. In Figure 3, (1), (3), (5), and (7) each show a bit pair comprising a reference bit R or a change bit C and a parity bit, and (2), (4) (6) and (8) each show bits that are transferred to an access control unit of the main storage MS for making a decision on page-out and so on.

For instance, when the main storage key K is read out at the time t1 as shown in (a)—(1) or (a)—(3), "01", which is a bit pair comprising a "0" reference bit R or change bit C and a "1" parity bit, is correct and consequently, a "0" as shown in (a)—(2) or (a)—(4) is transferred to the access control unit of the main storage MS. When readout takes place again at the subsequent time t2, if a one-bit error occurs which results in a bit pair "11" as shown in (b)—(1), the error is detected by a parity check and a "1" shown in (b)—(2) is transferred to the access control unit. That is, when an error is detected by the parity check, a "1" indicating an access or a store is transferred to the access control unit. Further, when the other bit of a bit pair also becomes erroneous as at the time t3 to provide "10" as shown in (c)—(1), it is decided as error-free by the parity check and "1" shown in (c)—(2) is transferred to the access control unit. Also in the case where the main storage key K is read out at the time t2 and a one-bit error occurs to provide "00", a "1" shown in (b)—(4) is transferred to the access control unit. Moreover, when the other bit becomes erroneous to provide "10" as shown in (c)—(3), it is decided as error-free by the parity check and a "1" shown in (c)—(4) is in (c)—(4) is transferred to the access control unit.

When the reference bit R is changed from a "0" to a "1", the priority for save of the page corresponding to the main storage key is reduced (as will be seen from Figure 2) and even if its priority is the first or second one, it is given the third or fourth priority. This merely reduces the number of pages of high priorities which are to be saved, but does not significantly impair the system performances. When the change bit C is changed from a "0" to a "1", the priority for save of the page is reduced as is the case with the reference bit (see Figure 2). Further, when the page corresponding to the main storage key is designated to be saved, a page-out operation takes place (when C="1"). This means that a page-out operation, which is omissible if the change bit C is a "0", is carried out, resulting in somewhat lowered system performances, but this does not matter so seriously.

In a case in which the correct content of a bit pair is "10" as shown in (a)—(5), if the reference bit R or the change bit C becomes erroneous as shown in (b)—(5), a "1" shown in (b)—(6) is transferred to the access control unit as a result of a parity check. However, if the content becomes "01" owing to an error of the other bit at the time of reading out the main storage key K at the time t3 as shown in (c)—(5), the content is decided as error-free by the parity check and a "0" shown in (c)—(6) is transferred to the access control unit. The same is true of the case where the content "10" of the bit pair at the time t1 changes to "11" at the time t2 and then changes to "01" at the time t3 as shown in (7). In this way, a change in the reference bit R or the change bit C increases the priority for save, and this introduces the possibility of saving a page which ought not to be saved. In consequence, there are some occasions when a page which may well be in use is paged-out and then paged-in, resulting in appreciably impaired system performance. Moreover, if the change bit C changes from a "1" to a "0" owing to an error, data rewritten on the main storage can be extinguished by the omission of the page-out operation. Accordingly, the system can break down in the worst case.

According to the present invention there is provided a key storage error processing system for a system which is provided with a key storage having stored therein main storage keys respectively corresponding to pages into which a main storage is divided, each main storage key having at least a reference bit indicating whether the corresponding page has been accessed and a change bit indicating whether information has been written into the page;

in which system:—

respective parity bits are added to the reference bit and the change bit to form the main storage key;

and which system comprises:—

detecting means for detecting a parity error in a pair consisting of the reference bit concerned and its associated parity bit and a pair consisting of the change bit concerned and its associated parity bit, when a main storage key is read out; and

characterised in that it comprises means for rewriting the main storage key after setting the reference bit concerned to a value indicating that the corresponding page has been accessed and adding a new parity bit to the thus set reference bit, when a parity error is detected by the detecting means in the pair consisting of the reference bit concerned and its associated parity bit, and/or after setting the change bit concerned to a value indicating that the corresponding page has been written into and adding a new parity bit to the thus set change bit, when a parity error is detected in the pair consisting of the change bit concerned and its associated parity bit.

The present invention can provide a key storage error processing system which remedies errors in reference and update (change) bits of a key storage.

An embodiment of the present invention can provide a key storage error processing system which performs correction processing at the time of detecting an error so as to prevent a system breakdown even by an error in key storage.

An embodiment of the present invention can provide a key storage error processing system which performs correction processing, with a simple arrangement, for preventing reduction of system performances, and for preventing system breakdown, by the detection of an error in a reference bit or change bit of a main storage key.

Briefly, according to an embodiment of the present invention, in a system which has main storage keys respectively corresponding to pages of a main storage, a parity bit is added to each of reference and change bits of the key and when the main storage key is read out a parity check takes place. If a parity error is detected the reference bit is set to a content indicating an access and the change bit is set to a content indicating a store (indicating that the page has been updated) and, further, a parity bit is added; and then the main storage key is rewritten.

Reference is made, by way of example, to the accompanying drawings, in which:—

Figure 1 is a schematic diagram explanatory of a main storage and a main storage key;

Figure 2 is a schematic diagram explanatory of save priority;

Figure 3 is a schematic diagram explanatory of a conventional error processing system;

Figure 4 is a schematic diagram explanatory of an error processing system embodying the present invention; and

Figure 5 is a block diagram illustrating apparatus in accordance with an embodiment of the present invention.

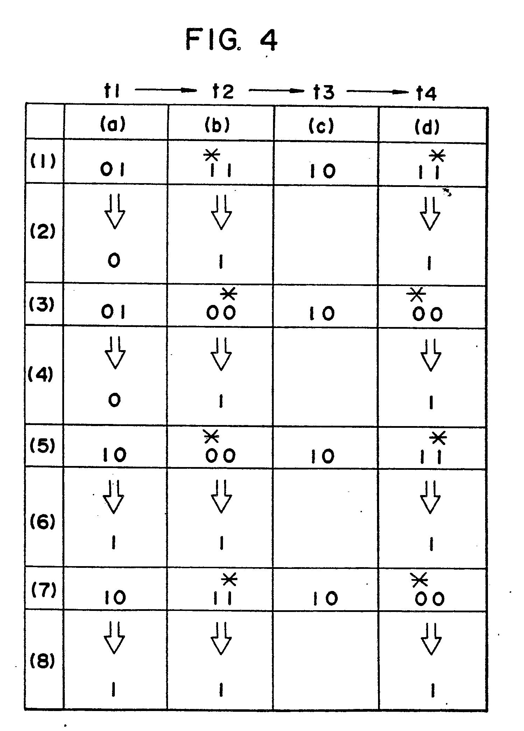

In Figure 4, (a) shows a case in which two bits (a bit pair) consisting of a reference bit R, or a change bit C, and a parity bit are correct at a time t1; (b) shows a case in which when the reference bit R, or the change bit C, is read out at the time t2, an error occurs in one of the two bits of the bit pair; (c) shows a case in which a rewrite is carried out at the time t3 because of a parity error; and (d) shows a case in which an error occurs in the other bit of the bit pair (the other bit as compared with (b)) when the reference bit R, or the change bit C, is read out at a time t4 an arbitrary period of time after the time t3. In Figure 4, an asterisk is used the bit in which an error has occurred. (1), (3), (5) and (7) show bit pairs each of a reference bit R or a change bit C and a parity bit, and (2), (4), (6) and (8) show bits that are transferred to an access control unit of the main storage MS for a decision on page-out and so on.

According to an embodiment of the present invention, in a case in which the pair made up of the reference bit R, or the change bit C, and the parity bit is initially correct (at time t1) and the main storage key is read out at the time t2, if a parity error is then detected a "1" is transferred to the access control unit and, at the immediately subsequent time t3, the reference bit R is set to a "1" indicating an access to the corresponding page (or the change bit C is set to a "1" indicating a store in the page, updating of the page) and, further, a "0" parity bit is added to the reference bit (or to the change bit), which is followed by rewriting of the main storage key. This state is shown in (c) corresponding to the time t3. That is to say, when an error is detected by the parity check of the pair of the reference bit R, or the change bit C, and the parity bit, a "1" is transferred to the access control unit and the reference bit R, or the change bit C, is set to a "1" and, at the same time, the parity bit is set to a "0" to provide a state in which the corresponding page is given a reduced priority for save, and then the main storage key is rewritten. Accordingly, even if an error occurs in another bit, different from the erroneous bit at the time t2, when the main storage key is read out at the time t4, a "1" is transferred to the access control unit of the main storage, reducing the priority for save. Furthermore, when the change bit C changes from a "1" to a "0" due to an error, page-out operation is not omitted even if the corresponding page is to be saved; therefore, the present invention exhibits an advantage over the prior art in that stored information on the main storage is not extinguished.

For example, in the case where a pair consisting of a "1" reference bit R, or change bit C, and a "0" parity bit is "10" at the time t1 as shown in (a)—(5), if it becomes "00" as shown in (b)—(5) when the main storage key is read out at the time t2, a "1" is transferred to the access control unit as shown in (b)—(6) and, at the time t3 immediately thereafter, the reference bit R, or the change bit C, is set to a "1" and the parity bit is set to a "0", and "10" is written as shown in (c)—(5). Assuming that the bit pair becomes "11" due to an error in one bit as shown in (d)—(5) when the main storage key is read out again at the time t4, the error is detected by a parity check and a "1" is transferred to the access control unit. Also in this case, "10" is written. Accordingly, even if the reference bit R or the change bit C changes from a "1" to a "0" owing to a bit error, and even if the parity bit changes from a "0" to a "1", the reference bit R or the change bit C is corrected to a "1" before rewriting. As a result of this, the priority for save is not raised and the page-out operation is not omitted, ensuring the prevention of system breakdown even if the page corresponding to the main storage key has to be saved.

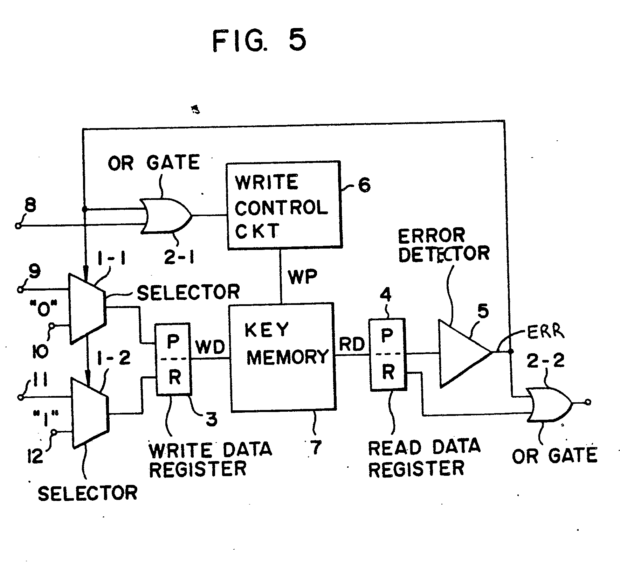

Figure 5 illustrates in block-form principal parts of apparatus in accordance with an embodiment of the present invention. In Figure 5, 1—1 and 1—2 are selectors; 2—1 and 2—2 are OR gates; 3 is a write data register; 4 is a read data register; 5 is an error detector, 6 is a write control circuit; 7 is a key memory; 8 a write signal input terminal; 9 is a parity bit input terminal; 10 is an input terminal to which a "0" is fixedly applied; 11 is a reference bit input terminal; 12 is an input terminal to which a "1" is fixedly applied; RD is read data; WD is write data; ERR is an error detection signal; WP is write pulses; R is a reference bit; and P is a parity bit. In Figure 5 there are shown only the parts associated with the reference bit of the main storage key; the change bit, other bits, the main storage, its access control units and so forth are not shown for the sake of brevity.

When the main storage key corresponding to one of the pages of the main storage is read out from the key memory 7, the read data RD is set in the read data register 4 and subjected to a parity check by the error detector 5 constituted by an exclusive NOR circuit or the like. When the read data is determined to be error-free by the parity check, the error detection signal ERR goes to "0". When the error detection signal ERR is "0", the selectors 1—1 and 1—2 select the parity bit and the reference bit from the input terminals 9 and 11. The reference bit is a bit that is input corresponding to the page of the main storage when the main storage is accessed, as described previously. Of the contents of the read data register 4, the reference bit R is provided via the OR gate 2—2 to an access control unit not shown.

When an error is detected in the error detector 5, the error detection signal ERR goes to "1". This "1" is transferred via the OR gate 2—2 to the access control unit. That is, when an error is detected, even if the reference bit R is a "0", "1" is provided to the access control unit on the assumption that the reference bit R is a "1". And when the error detection signal ERR is "1", the selectors 1—1 and 1—2 select the "0" and the "1" which are fixedly applied to the input terminals 10 and 12, respectively, and apply them to the write data register 3. The write control circuit 6 is started by a "1" which is applied thereto via the OR gate 2—1, and outputs the write pulses WP. By the write pulses WP the contents of the write data register 3 are written into the key memory 7. In this case, since the contents of the write data register 3 are written into the same address as the address of the main storage key read out, the reference bit R and the parity bit P of the main storage key are written as "10". In other words, the reference bit R and the parity bit P are rewritten by the error detection into "10" as shown in (c) in Figure 4.

Furthermore, a bit pair comprising a change bit C and a parity bit is also rewritten by the error detection through an arrangement similar to that above described.

As has been described above, in an embodiment of the present invention, when a bit pair of a reference bit R, or a change bit C, and a parity bit are read out, if a parity error is detected, the main storage key is rewritten with a reference bit value indicating that the page corresponding to the main storage key has been accessed (and a change bit value indicating that the page has been rewritten). Accordingly, the save priority of the relevant page of the main storage is not raised and a required page is not saved. Even if the page is saved, necessary data is not extinguished because the page-out operation is carried out without fail. Therefore, system breakdown can be avoided.

Thus, in an embodiment of this invention, in a system which is provided with a key storage having stored therein main storage keys respectively corresponding to pages into which a main storage is split, each main storage key has at least a reference bit indicating whether the corresponding page has been accessed and a change bit indicating whether information has been written in the corresponding page. A parity bit is added to each of the reference bit and the change bit to form the main storage key. There are provided detecting means for detecting a parity error in a pair consisting of the reference bit and its parity bit, and for detecting a parity error in a pair consisting of change bit and its parity bit, when the main storage key is read out.

There are also provided means for rewriting the main storage key after setting the reference bit to a "1" indicating that the corresponding page has been accessed, and after adding a new parity bit "0" to the reference bit, when a parity error is detected by the detecting means in the pair consisting of the reference bit and its parity bit, and/or after setting the change bit to a "1" indicating that the corresponding page has been written into, and after adding a new parity bit "0" to the change bit, when a parity error is detected in the pair consisting of the change bit and its parity bit, whereby to control the save of the pages of the main storage.

## Claims

1. A key storage error processing system for a system which is provided with a key storage having stored therein main storage keys respectively corresponding to pages into which a main storage is divided, each main storage key having at least a reference bit indicating whether the corresponding page has been accessed and a change bit indicating whether information has been written into the page;

in which system:—

respective parity bits are added to the reference bit and the change bit to form the main storage key;

and which system comprises:—

detecting means for detecting a parity error in a pair consisting of the reference bit concerned and its associated parity bit and a pair consisting of the change bit concerned and its associated parity bit, when a main storage key is read out; and characterised in that it comprises

means for rewriting the main storage key after setting the reference bit concerned to a value indicating that the corresponding page has been accessed and adding a new parity bit to the thus set reference bit, when a parity error is detected by the detecting means in the pair consisting of the reference bit concerned and its associated parity bit, and/or after setting the change bit concerned to a value indicating that the corresponding page has been written into and adding a new parity bit to the thus set change bit, when a parity error is detected in the pair consisting of the change bit concerned and its associated parity bit.

2. A key storage error processing system according to claim 1, further comprising a write control circuit which is triggered by an error detection signal when the parity error is detected by the detecting means, and a selector for applying to the key storage the reference bit, or the change bit, and the associated new parity bit after setting the former to "1" and the latter to "0" in response to the error detection signal.

## Patentansprüche

1. Schlüsselspeicherfehlerverarbeitungssystem für ein System, welches einen Schlüsselspeicher hat, in dem Hauptspeicherschlüssel gespeichert sind, welche jeweils Seiten entsprechen, in die ein Hauptspeicher unterteilt ist, wobei jeder Hauptspeicherschlüssel wenigstens ein Referenzbit hat, welches anzeigt, ob zu der entsprechenden Seite zugegriffen wurde, und ein Änderungsbit, welches anzeigt, ob Information in die Seite eingeschrieben worden ist;

bei welchem System:—

entsprechende Paritätsbits zu dem Referenzbit und dem Änderungsbit hinzugefügt werden, um den Hauptspeicherschlüssel zu bilden;

und welches System umfaßt:—

Leseeinrichtungen zum Lesen eines Paritätsfehlers in einem Paar, das aus dem betreffenden Referenzbit und seinem zugeordneten Paritätsbit besteht, und einem Paar, das aus dem betreffenden Änderungsbit und seinem zugeordneten Paritätsbit besteht, wenn ein Hauptspeicherschlüssel ausgelesen wird; und dadurch gekennzeichnet, daß es

Einrichtungen zum Rückschreiben des Hauptspeicherschlüssels nach Setzen des betreffenden Referenzbits auf einen Wert umfaßt, welcher anzeigt, daß zu der entsprechenden Seite zugegriffen wurde, und zum Hinzufügen eines neuen Paritätsbits zu dem so gesetzten Referenzbit, wenn die Leseeinrichtung einen Paritäts fehler in dem Paar feststellt, das aus dem betreffenden Referenzbit und seinem zugeordneten Paritätsbit besteht, und/oder nach Setzen des betreffenden Änderungsbits auf einen Wert, der anzeigt, daß die entsprechende Seite eingeschrieben wurde, und zum Hinzufügen eines neuen Paritätsbit zu dem so gesetzten Änderungsbit, wenn ein Paritätsfehler in dem Paar festgestellt wird, das aus dem betreffenden Änderungsbit und seinem zugeordneten Paritätsbit besteht.

2. Schlüsselspeicherfehlerverarbeitungssystem nach Anspruch 1, ferner mit einer Schreibsteuerschaltung, welche durch ein Fehlerfeststellungssignal getriggert wird, wenn der Paritätsfehler durch die Detektoreinrichtung festgestellt wird, und einem Selektor zur Zuführung des Referenzbits, oder des Änderungsbits, und des zugeordneten neuen Paritätsbits, nach Setzen des ersten auf "1" und des letzteren auf "0", in Abhängigkeit von dem Fehlerfeststellungssignal, zu dem Schlüsselspeicher.

**Revendications**

1. Système de traitement d'erreur de mémoire de codes destiné à un système qui est doté d'une mémoire de codes dans laquelle sont emmagasinés des codes de mémoire principale correspondant respectivement à des pages suivant lesquelles une mémoire principale est divisée, chaque code de mémoire principale possédant au moins un bit de référence qui indique s'il a été ou non fait accès à la page correspondante et un bit de changement qui indique si une information a ou non été écrite dans la page;

dans lequel système:

des bits de parité respectifs sont ajoutés au bit de référence et au bit de changement pour former le code de mémoire principale;

et lequel système comprend:

un moyen de détection servant à détecter une erreur de parité dans la paire formée du bit de référence considéré et de son bit de parité associé et une paire formée du bit de changement considéré et de son bit de parité associé, lors de la lecture d'un code de mémoire principale; et

caractérisé en ce qu'il comprend un moyen permettant de réécrire le code de mémoire principale après positionnement du bit de référence considéré sur une valeur indiquant qu'il a été donné accès à la page correspondante et addition d'un nouveau bit de parité au bit de référence ainsi positionné, lorsqu'une erreur de parité est détectée par le moyen de détection dans la paire formée du bit de référence considéré et de son bit de parité associé, et, ou bien, après positionnement du bit de changement considéré sur une valeur indiquant que la page correspondante a été écrite et addition d'un nouveau bit de parité au bit de changement ainsi positionné, lorsqu'une erreur de parité est détectée dans la paire formée du bit de changement considéré et de son bit de parité associé.

2. Système de traitement d'erreur de mémoire de codes selon la revendication 1, comprenant en outre un circuit de commande d'écriture qui est déclenché par un signal de détection d'erreur lorsque l'erreur de parité est détectée par le moyen de détection, et un sélecteur servant à appliquer à la mémoire de codes le bit de référence, ou le bit de changement, et le nouveau bit de parité associé après positionnement du premier sur "1" et du dernier sur "0" en réponse au signal de détection d'erreur.

# FIG. 1

# FIG. 2

| R | C | PRIORITY |
|---|---|---|
| 0 | 0 | 1 |
| 1 | 0 | 2 |
| 0 | 1 | 3 |
| 1 | 1 | 4 |

# FIG. 3

| | t1 ⟶ t2 ⟶ t3 | | |
|---|---|---|---|
| | **(a)** | **(b)** | **(c)** |
| (1) | 0 1 | \*<br>1 1 | \* \*<br>1 0 |
| (2) | ⇓<br>0 | ⇓<br>1 | ⇓<br>1 |
| (3) | 0 1 | \*<br>0 0 | \* \*<br>1 0 |
| (4) | ⇓<br>0 | ⇓<br>1 | ⇓<br>1 |
| (5) | 1 0 | \*<br>0 0 | \* \*<br>0 1 |
| (6) | ⇓<br>1 | ⇓<br>1 | ⇓<br>0 |
| (7) | 1 0 | \*<br>1 1 | \* \*<br>0 1 |
| (8) | ⇓<br>1 | ⇓<br>1 | ⇓<br>0 |

# FIG. 4

| | t1 → (a) | t2 → (b) | t3 → (c) | t4 → (d) |
|---|---|---|---|---|
| (1) | 0 1 | *1 1 | 1 0 | *1 1 |
| (2) | ⇓ 0 | ⇓ 1 | | ⇓ 1 |
| (3) | 0 1 | *0 0 | 1 0 | *0 0 |
| (4) | ⇓ 0 | ⇓ 1 | | ⇓ 1 |
| (5) | 1 0 | *0 0 | 1 0 | *1 1 |
| (6) | ⇓ 1 | ⇓ 1 | | ⇓ 1 |
| (7) | 1 0 | *1 1 | 1 0 | *0 0 |
| (8) | ⇓ 1 | ⇓ 1 | | ⇓ 1 |

# FIG. 5